# EUROPEAN PATENT SPECIFICATION

(11) **EP 0 645 492 B1**
(45) Date of publication and mention of the grant of the patent: **02.12.1998**
(21) Application number: 93307632.5
(22) Date of filing: 27.09.1993
(51) Int. Cl.: E01B 31/04

(54) **Apparatus for cutting railroad rails**
Trenneinrichtung für Eisenbahnschienen
Dispositif de sectionnement pour rails de chemin de fer

(43) Date of publication of application: 29.03.1995
(73) Proprietor: KABUSHIKI KAISHA YAMAZAKI HAGURUMA SEISAKUSHO, Atsugi-shi, Kanagawa-ken (JP)
(72) Inventor: Noda, Hirotoshi, c/o K.K. Yamazaki, Atsugi-shi, Kanagawa-ken (JP)
(74) Representative: Bridge-Butler, Alan James

(56) References cited:
- WO-A-93/25758
- FR-A- 2 267 418
- FR-A- 2 639 373
- US-A- 4 033 074
- US-A- 4 765 098

## Description

The present invention relates to railroad rail cutting apparatus, and particularly concerns apparatus for in situ cutting of railroad rails to specified lengths during laying or joining of railroad rails.

Cutting machines having flat, rotary grinding disk saws that are driven by a power source to cut rails to specified lengths are employed during the laying of railroad rails and the replacement of worn rails.

Conventional cutting machines are of a configuration whereby the main body is clamped to the railroad rail and the grinding disk saw is advanced in a specified single direction while the grinding disk saw is rotated. Because of this single direction of advance of the blade, the entire width of the head of the rail is cut crosswise without changing the contact position of the grinding disk saw with respect to the railroad rail.

In such a cutting method, since the grinding disk saw continuously rotates keeping the same cutting line as given at first contact, not only is a large amount of frictional heat generated and consequently the rail is hardened in the region of the cut, but also a large engine is required to drive the rotary grinding disk saw due to this large friction. Then, vibration is readily transmitted to the rotary grinding disk saw and substantial cutting pressure is needed, which causes widened and deflected cuts, impeding high-precision cutting.

There is known from US-A-4 033 074 a hand carried portable rail saw assembly which includes a saw having a rotatable blade, a clamp adapted to attach to a rail to be cut and an axial locater adjustably mounted on the clamp and supporting the saw. The saw is pivotable attached to the axial locater and is arranged for pivotal movement from one side of the rail to the other so that first one side of the rail is cut and then the opposite side is cut.

The object of the present invention is to provide a high-performance rail cutting machine wherein high-precision cutting is performed with a narrow cut to prevent hardening of the rail, a small, light power source is used for easy handling, and the positioning of the cutting machine is easily made.

According to the present invention there is provided a cutting apparatus for a railroad rail, comprising a clamping device having a locating frame engageable with one lateral face of the rail and a clamp arm acting on the other face of the rail to urge the locating frame into contact therewith, a cutting saw having a circular cutting blade, the saw being mounted on a pivoting arm for swinging movement in a plane perpendicular to the axis of a rail clamped in the clamping device, the pivoting arm being mounted on a body which can move towards or away from the clamping device, wherein the body is mounted for sliding motion on a pair of parallel bars extending from the locating frame and wherein a swinging handle is pivotably mounted on the locating frame and connected to the body by a connecting rod attached to the swinging handle intermediate its length for moving the cutting blade forwards and backwards in a direction perpendicular to the axis of the rail during cutting thereof.

The parallel bars may extend substantially horizontally and may be perpendicular relative to the rail.

The locating frame may comprise a plurality of locations to which locating studs may be fixed, the locating studs being shaped to cooperate with respective rail cross-sections to provide positive location of the locating frame relative to the rail. The locating studs may comprise a medial rail support for applying pressure to the central web of the rail, an upward rail support for applying upward pressure to the rail head and upper rail supports for applying pressure to the side of the rail head.

A clamp screw may be threaded through the clamp arm to apply a vertical force to the rail.

The cutting saw may be mounted to the free end of the pivoting cutting arm, the blade being driven in rotation by a motor mounted on the cutting arm.

The angle between the surface of the rail and the radius extending from the axis of rotation of the saw blade to the corner of the rail at its point of contact with the saw blade may be about 45 degrees.

A handle may be attached to the pivoting arm for urging the saw blade against the rail.

Springs may be provided for controlling the cutting pressure.

An embodiment of the present invention will now be described in detail with reference to the accompanying drawings, in which:
Figure 1 is an overall perspective view of the railroad rail cutting apparatus of the present invention;
Figure 2 is an exploded perspective view of the cutting apparatus of the present invention;
Figure 3 is a side view of a railroad rail clamp mechanism of the cutting apparatus of the present invention;
Figure 4 is a perspective view of a gauge to indicate a cut position, shown mounted on the upper surface of the railroad rail;
Figure 5 is a explanatory schematic perspective view showing the engagement of the apparatus with a rail;
Figure 6 is a schematic side view showing the mounting position of the main body block of the cutting apparatus relative to a rail;
Figures 7a to 7c are illustrations showing the change in cutting engagement of the rotary grinding disk saw with the rail; and
Figures 8 to 14 are perspective views illustrating various stages in the operation of the cutting apparatus of the present invention.

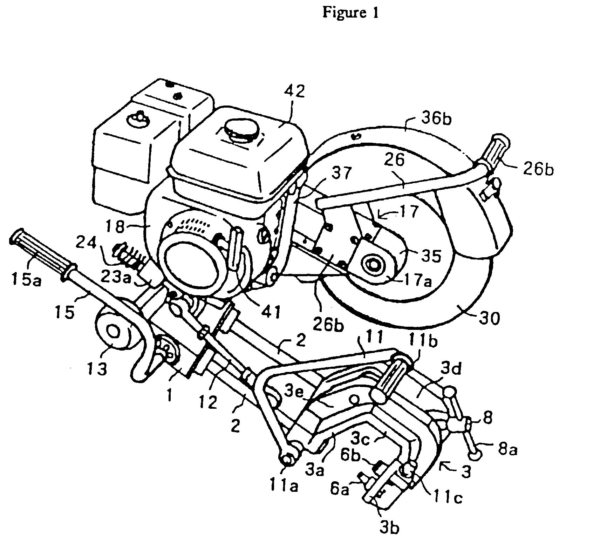

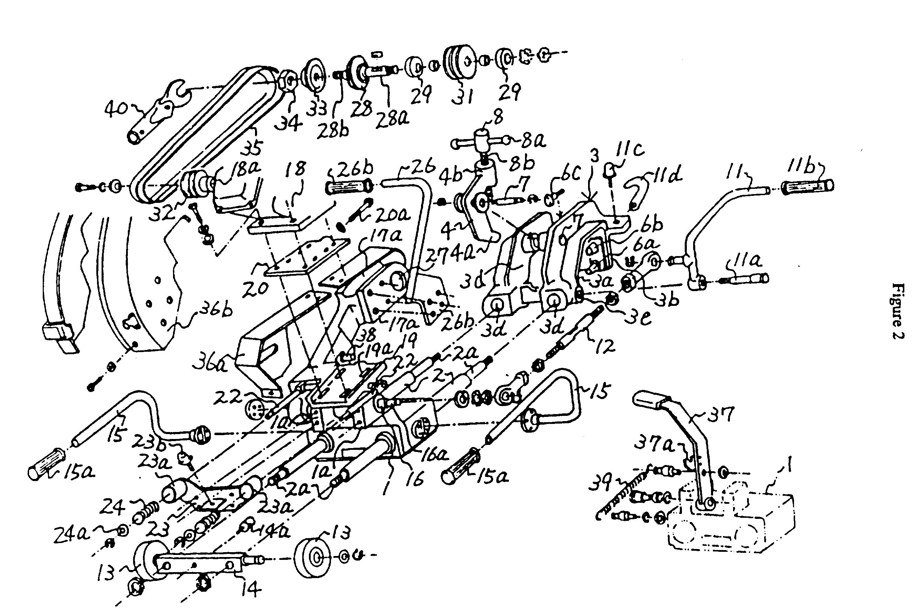

Referring now to the drawings, in Figures 1 and 2, the main body block 1 is slidingly supported on two juxtaposed parallel slide shafts 2. In addition to passing through main body block 1 from front to back, the ends 2a of each of these slide shafts 2 are threaded.

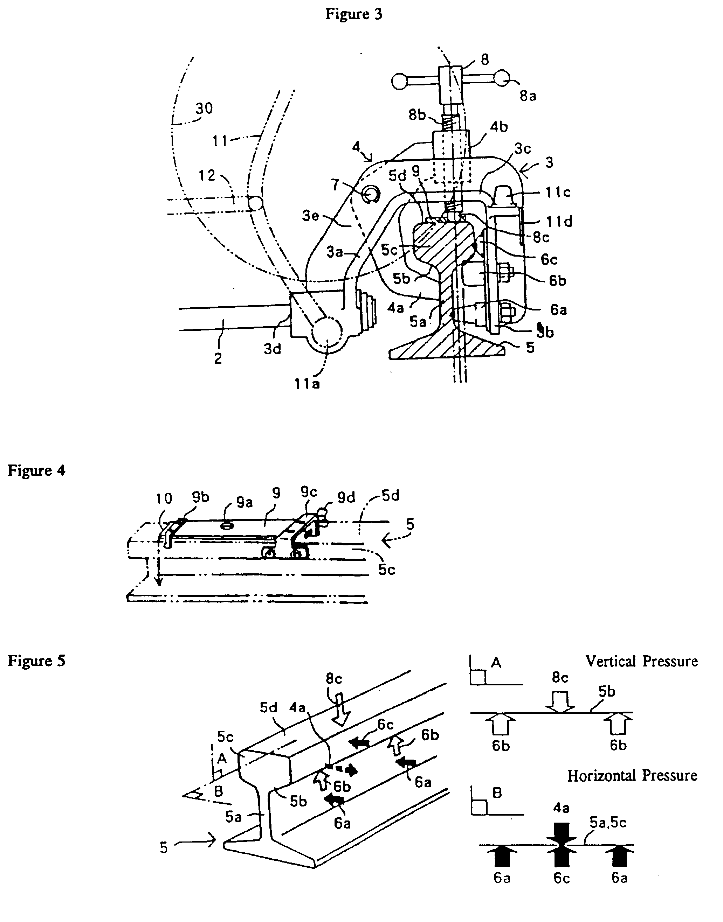

As shown in Figure 3, a locating frame 3, which has a generally U-shaped longitudinal section formed by front and back wall surfaces 3a, 3b and a ceiling surface 3c, is formed with through holes 3d side by side in the back wall 3a as viewed when its open side is faced downward, (the left side as viewed in Figures 1 and 3). The threaded parts 2a at the ends (the right-hand side as viewed in Figures 1 and 3) of the slide shafts 2 are fastened by nuts in said through holes 3d.

In this instance, through holes 3d are formed so that slide shafts 2 fastened in the through holes 3d extend perpendicularly with respect to front wall surface 3b of locating frame 3.

Various supports are provided on the interior of the front wall 3b of locating frame 3, which faces one longitudinal surface of a railroad rail 5 of specific cross-section held between wall surfaces 3a and 3b, as seen in Figure 3. That is, as the position and direction of these rail supports are indicated by arrows in Figure 5, the central web 5a of the rail 5 is supported horizontally at two points, the under surface 5b of the head 5c of the rail 5 is supported horizontally at two points, and the side surface of the rail head 5c is supported at one central point. Moreover, as shown in Figure 3, the rail support means, comprising the two juxtaposed medial rail abutments 6a, the two juxtaposed rail jaw abutments 6b, and the single rail top abutment 6c, is configured so as to bring front wall surface 3b into uniform contact with railroad rail 5, and to position the front wall 3b in a plane parallel to the plane of symmetry of the rail.

Generally U-shaped clamp arm 4, having lower a jaw 4a positioned at its lower end and threaded cylindrical sleeve 4b at its upper end is installed in a space formed in locating frame 3, and the curved portion of clamp arm 4 is supported for pivoting movement by a shaft 7 extending parallel to the rail 5 through two flange members 3e of locating frame 3. The threaded part 8b of a clamp screw 8 is screwed vertically down through the threaded cylindrical sleeve 4b by turning handle 8a so as to bring the lower end 8c to extend downward.

As shown in Figure 3, a line projected vertically downward through the lower end 8c of clamp screw 8 is located at approximately the centre between medial rail abutments 6a and top rail abutment 6b. This configuration permits clamp screw 8 to be tightened in a stable manner.

As shown in Figure 4, a gauge 9 has a clamping strip 9b, secured to one end of a flat plate, which is tightly fastened onto the upper surface of railroad rail 5 of specified width from above, and a high-pressure clamping strip 9c, secured to the other end, which is fastened onto railroad rail 5 in a similar manner to fastening the clamping strip 9b. With a knurled or wing-type fastening screw 9d, one side of high-pressure clamping strip 9c is fastened to the side surface of the rail head 5c. The end of the flat plate adjacent the clamping strip 9b indicates the cutting position 10.

During cutting of railroad rail 5, the lower end 8c of clamp screw 8 is fitted into a recess or countersink 9a bored in a specific position in the upper surface of gauge 9 which is used to indicate a cutting position. That is, in order to cut a railroad rail 5 crosswise, gauge 9 is first mounted on the surface of railroad rail 5, and the cutting apparatus is automatically positioned and secured in the required position on railroad rail 5 by tightening clamp screw 8 to bring its lower end 8c itself into abutment with the countersink 9a of gauge 9.

An expected cutting line corresponding to the cutting position 10 is accurately perpendicular to the lengthwise direction of railroad rail 5. The distance between the recess or countersink 9a bored in the upper surface of gauge 9 and the end of the gauge corresponds to the distance between the plane of the cutting saw and the lower end 8c of clamp screw 8.

Thus, as shown in Figure 5, by tightening clamp screw 8, the rail head 5c is tightly clamped from above and below by rail top abutments 6b (double point support) opposite the lower end 8c of clamp screw 8 (single point support). At the same time, the central web 5a of rail 5 is clamped by medial rail abutments 6a (double point support) on locating frame 3, and the side of the rail head 5c is clamped on the same side by rail head abutment 6c (single point support). The central web 5a of rail 5 is firmly held against this three-point support from one side of the railroad rail 5 by a lower jaw 4a (one point support) of clamp arm 4.

As a result, railroad rail 5 can be clamped perpendicularly in vertical and horizontal directions by simply tightening the single clamp screw 8 onto countersink 9a of gauge 9, and main body 1 can be slid horizontally perpendicularly with respect to the axis of railroad rail 5.

There are illustrations to the right side of Figure 5 showing the characteristic of perpendicular clamping of railroad rail 5 for vertical and horizontal components.

Positioned to one side of locating frame 3, and in close proximity to where slide shafts 2 are secured, an upwardly extending stroke handle 11 is supported for swinging movement by shaft 11a. Protruding member 16a of a support shaft 16, which is provided so as to extend from the side of upper support members 1a of main body 1, is connected to the middle of stroke handle 11 by connecting bar 12 so as to be movable relative to each other. By swinging the stroke handle 11, the main body 1 can be moved towards and away from the locating frame 3.

With this configuration, once locating frame 3 has been fixed to railroad rail 5, main body 1 can be horizontally advanced or withdrawn with respect to railroad rail 5 by moving stroke handle 11 forward or backward by hand. A rubber hand grip 11b is shown on stroke handle 11. Stroke handle 11 can be locked in the forwardly inclined position by being hooked on a handle hook 11d through a stopper 11c positioned on a laterally protruding member of locating frame 3.

The threaded portions 2a of the ends of slide shafts 2 remote from locating frame 3 are anchored in a support member 14 which is equipped with wheels 13 on both ends. This support member 14 is provided with a stop 14a, capable of abutting the side of main body 1 to lessen the impact on support 14 when main body 1 moves forward or backward. Further, carrying handles 15 are secured to both sides of main body 1. Rubber hand grips 15a are placed over the ends of carrying handles 15.

A cutting arm 17 is mounted for swing movement on support member 1a, on the upper part of main body 1, by a support shaft 16. The cutting arm 17 is mounted so as to swing perpendicularly to the lengthwise direction of railroad rail 5 once locating frame 3 has been clamped on railroad rail 5 in the manner set forth above, i.e. the cutting arm 17 swings in a plane parallel to the guide bars 2.

Cutting arm 17 is configured to have a free end protruding toward locating frame 3. A support plate 19 is provided on the cutting arm 17 in a position where cutting arm 17 is pivoted, i.e. above main body 1. To this support plate 19, an engine 18 is bolted through an intermediate plate 20 so as to place the end of its output shaft 18a adjacent to cutting arm 17. This engine 18 may be an internal combustion type or an electric motor. The engine shown in the drawings is of a combustion type and is provided with necessary devices such as fuel tank 42, starter lever 41, etc.

By elongating bolt holes 19a on support plate 19 in the lengthwise direction to form slots, and providing an adjustment bolt 20a threaded into the front of intermediate plate 20, the lengthwise position of engine 18 may be adjusted by screwing in and out the adjustment bolt 20a.

Cylindrical members 23a are provided on both ends of an attachment plate 23 facing support shafts 22 which protrude toward the rear on both sides of support plate 19. In addition to housing the ends of coil springs 24 in the cylindrical members 23a and inserting support shafts 22 through coil springs 24, the ends of support shafts 22 are held and secured by washers 24a, preventing slipping off of coil springs 24. Furthermore, the lower side surface of attachment plate 23 is bolted to the back surface of support members 1a of main body 1. Thus, as the cutting arm 17 pivots to bring the saw toward the rail, springs 24 are compressed.

Stopper 23b, extending upward, is secured via a bracket to the side of attachment plate 23 and is adapted to abut against the bottom of support plate 19 so as to restrict the amount the cutting arm 17 swings toward the rear.

The free end of cutting arm 17 is divided to form two plates 17a, one of which has attached thereto an upwardly extending handle 26, with a grip 26a. Handle 26 can be locked in a forward position by hooking it on a handle hook 26d via a stopper 26c positioned on a protruding side member of locating frame 3.

Cutting arm 17 is formed with mounting holes 27 in plates 17a to permit installation of flanged rotary shaft 28 for rotation. Flanged rotary shaft 28 is inserted into mounting holes 27 leaving the flange portion exposed on the exterior. Pulley 31 is secured between the plates 17a on one end 28a of shaft 28 protruding from the inner side of rotation shaft 28 so as to rotate together with shaft member 28a. Bearings 29 are positioned on both sides of pulley 31, and the end 28a of shaft 28 is secured with a nut fitting bearing 29 against mounting holes 27 on plates 17a. On the other end 28b of shaft 28, a flat grinding disk saw 30 is abutted against the flange portion of flanged rotary shaft 28 and detachably secured to the shaft 28 from the outside via a flange 33 with a nut 34.

Belt 35 is then placed over the pulley 31 positioned between plates 17a and over a pulley 32 secured on output shaft 18a of engine 18. In this configuration, with the cutting arm 17 perpendicular to railroad rail 5, the grinding disk saw 30 is attached so that the plane of grinding disk saw 30 is perpendicular to the lengthwise direction of railroad rail 5. A cover 36a for the belt 35 and a cover 36b for the grinding disk saw 30, are mounted on cutting arm 17.

Since it is sometimes necessary in such a configuration to pivot the cutting arm 17 and hold it in a raised position, an arm lock lever 37 is pivotally supported by a shaft on the top of main body 1 as shown at the lower right of Figure 2. This arm lock lever 37 is also linked to main body 1 via spring 39. A notched tab 37a secured to the middle of arm lock lever 37 automatically catches on a small shaft 38 protruding in close proximity to the support of the cutting arm 17 when the cutting arm is raised to a certain degree. To release this engagement, handle 26 is slightly raised so as to lift cutting arm 17 upward, and then arm lock lever 37 is pulled forward so as to release the engagement between notched tab 37a and shaft 38.

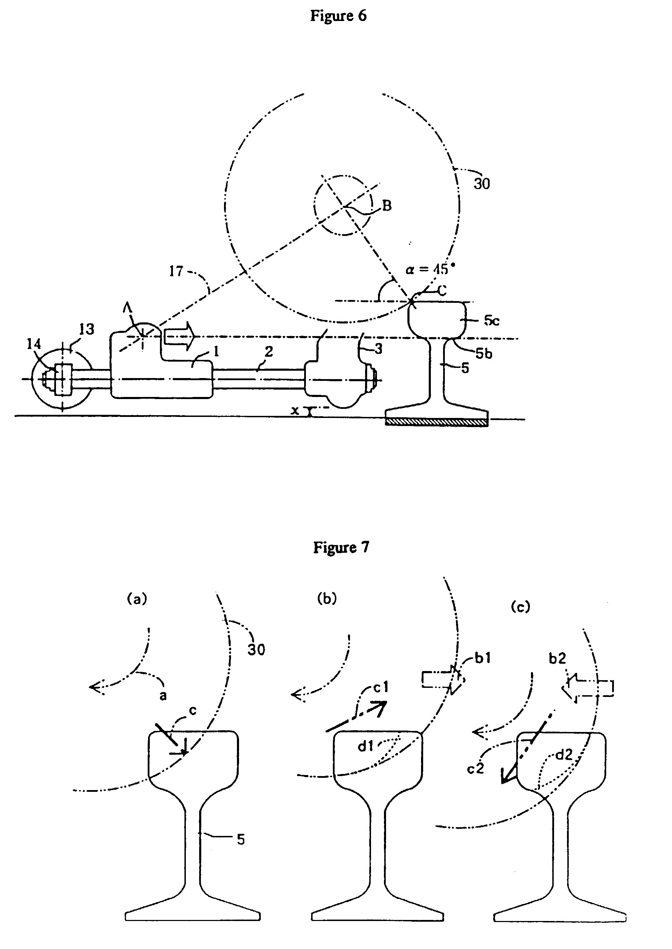

In the configuration set forth above, as shown in Figure 6, cutting arm 17 pivots about the pivot axis A (support shaft 16), and is positioned so that an angle of approximately 45° is formed between the upper surface of rail 5 and the radius of grinding disk saw 30 from the axis of rotation B to the point C where grinding disk saw 30 contacts with the corner of rail 5. While the cutting arm 17 is constrained to swing about support shaft 16, it varies in position due to its own weight and forces exerted by coil springs 24, so as to provide a uniform cutting pressure to the cut in rail 5 formed by grinding disk saw 30. By moving main body 1 forward and backward, rotating grinding disk saw 30 is smoothly moved along the kerf of the cut in rail 5.

Furthermore, in the configuration, set forth above, when the axis of rotation A of cutting arm 17 is positioned below the upper surface of the rail head 5c, the location of the axis of rotation A approaches closer the horizontal centre of railroad rail 5 along the entire length, so that a uniform distance is provided between the axis of rotation A and railroad rail 5. This is advantageous in that it becomes possible to use the same stroke on stroke handle 11, simplifying operation.

However, in this instance, a certain clearance X between the lowest position of locating frame 3 and the surface of the ground is desirable to permit direct cutting of rails already secured in position.

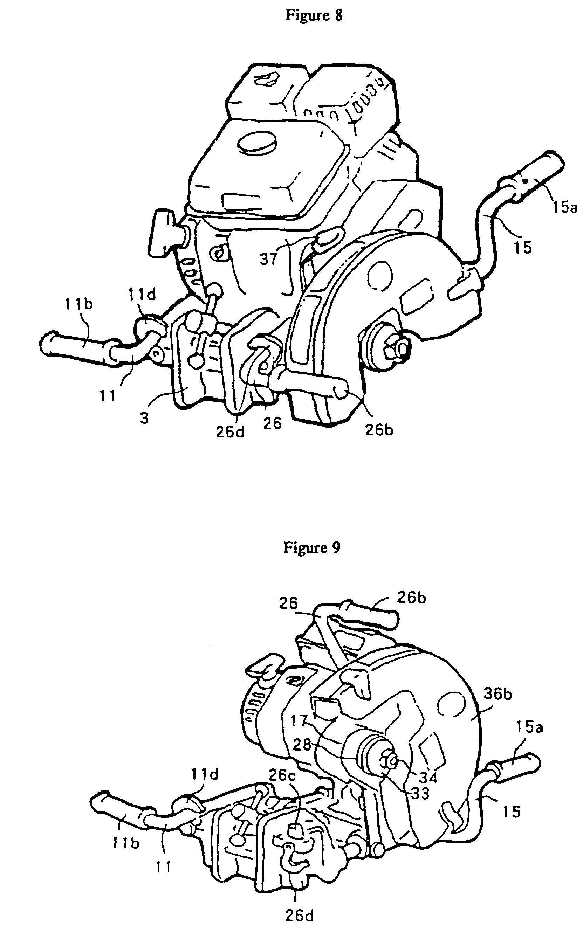

The effect and operation of the railroad rail apparatus of the configuration set forth above will now be described with reference to Figures 8 to 14.

In Figure 8, when transporting the cutting apparatus of the present invention, stroke handle 11 and handle 26 are first engaged and locked by handle locks 11d and 26d, respectively. One person then lifts stroke handle 11 and handle 26, and another person lifts both carrying handles 15.

Next, in Figure 9, handle lock 26d on handle 26 is released and handle 26 is raised. Notched tab 37a on arm lock lever 37 then catches and locks shaft 38 of cutting arm 17, fixing the cutting arm 17 in a raised position. Grinding disk saw 30 is then placed on shaft member 28a of flanged rotary shaft 28 and, as shown in Figure 2, secured with nut 34 via flange 33 using a wrench 40.

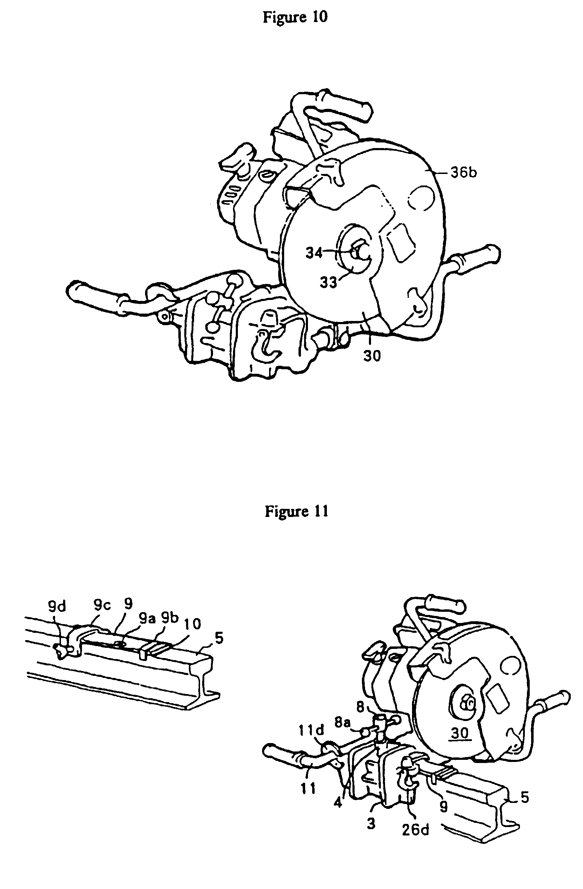

Subsequently, as shown in Figure 10, the gauge 9 is fixed on the railroad rail to be cut, with the cutting position 10 indicated by gauge 9 aligned with the intended cutting line on the railroad rail 5. Thereafter, while the clamp of the cutting apparatus is lifted and seated on railroad rail 5, the lower end 8c of clamp screw 8 is fitted into countersink 9a of gauge 9, and clamp screw 8 is then tightened.

During setting up, if the person who holds the carrying handles 15 lightly rocks the cutting apparatus main body while tightening clamp screw 8, the two medial rail abutments 6a, the two rail jaw abutments 6b and the one rail top abutment 6c on the locating frame 3, and lower jaw 4a of clamp arm 4 are uniformly seated at desired points on railroad rail 5 and a correct, secure clamping is achieved.

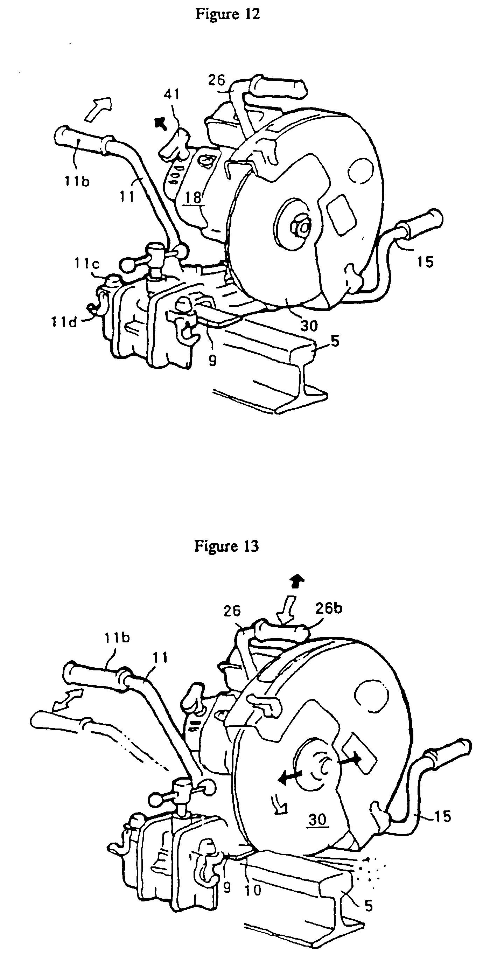

Then, as shown in Figure 12, handle hook 11d of stroke handle 11 is disengaged and handle 26 is raised so that grinding disk saw 30 is moved away from railroad rail 5. In this position, engine 18 is then started and left idling.

Subsequently, after having gradually increased the engine speed so as to bring grinding disk saw 30 into stable rotation without vibration, as shown in Figure 12, handle 26 is slightly raised (in the direction of the black arrow in Figure 12) and arm lock lever 37 is pulled forward to free cutting arm 17. While handle 26 is then steadily lowered (in the direction of the white arrow in Figure 13), grinding disk saw 30 is brought into contact with the upper part of the rail 5. The engine is fully powered up once a small cut has been made in the top part of rail 5.

While holding handle 26 enough to prevent grinding disk saw 30 from rocking up and down, stroke handle 11 is moved back and forth about 30cm at intervals of 1 to 2 seconds to cut the railroad rail.

As shown in Figure 7b, in this cutting operation, when stroke handle 11 is pulled forward (toward the operator) while the rotating grinding disk saw 30 is rotating in the direction of arrow a, as grinding disk saw 30 moves in the direction of arrow b1, the cutting position of rotating grinding disk saw 30 raises smoothly as shown at c1. Upper corner d1 is cut with a short length of cut, after which stroke handle 11 is pushed back (away from the operator) to move grinding disk saw 30 in the direction of arrow 2b as grinding disk saw 30 smoothly drops, as shown at c2, steadily cutting the centre portion protruding in the middle and lower portion d2.

By moving stroke handle 11 back and forth in this manner, the cut d1 - d2 of rotating grinding disk saw 30 is continuously varied, changing the areas in which frictional heat is generated. Moreover, since the contact length of rotating grinding disk saw 30 is reduced to d1 - d2 while cutting advances, little torque is required to drive the rotating grinding disk saw. By way of comparison with the present invention, when the cut of a rotating grinding disk saw 30 rotating in the direction a as shown in Figure 7a is not varied, continuously remaining in the same position, frictional heat is generated and the contact length of rotating grinding disk saw 30 in the cut increases with the total width of railroad rail 5 to a level where a much higher degree of grinding disk saw torque becomes necessary.

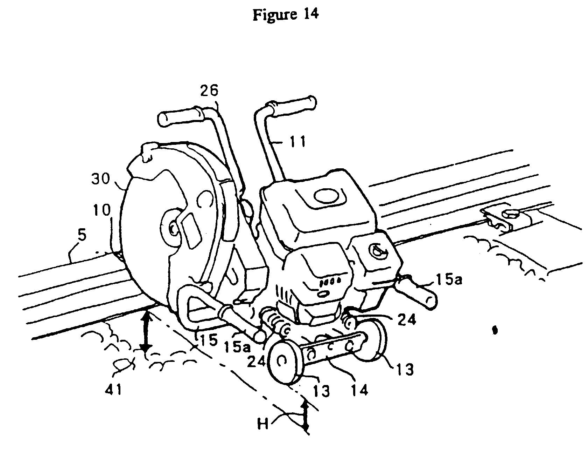

Figure 14 shows the back of the present cutting machine mounted on a railroad rail 5. As set forth above, since the present cutting machine is clamped in a position higher than the bottom of railroad rail 5 as indicated by an arrow H, the railroad rail 5 can be cut without first being lifted. However, removal of ballast 41 to a depth of 10cm below the location of the cut made by the rotating grinding disk saw is desirable.

The present invention as described above, thus provides an apparatus for cutting rails to specific lengths, the cutting machine being readily positionable on the rail for a given cut. The apparatus is suitable for cutting railroad rails where they have been laid, and is convenient for emergency railroad rail replacement.

In the cutting operation, by moving the stroke handle back and forth, the rotating grinding disk saw is smoothly moved along the line of the cut, varying the cutting position of said rotating grinding disk saw. In this manner, not only is the frictional heat associated with cutting reduced, but cutting advances with only minimal contact length of the rotating grinding disk saw within the cut. The rail is therefore not hardened, and cutting requires much less torque. Since a small, light power source can thus be used, the rotating grinding disk saw has no propensity for deflection, and thin, precise cuts are made.

Weight reduction also simplified operations such as transport, handling and setting.

## Claims

1. A cutting apparatus for a railroad rail (5), comprising a clamping device having a locating frame (3) engageable with one lateral face of the rail and a clamp arm (4) acting on the other face of the rail to urge the locating frame into contact therewith, a cutting saw having a circular cutting blade (3), the saw being mounted on a pivoting arm (17) for swinging movement in a plane perpendicular to the axis of a rail (5) clamped in the clamping device, the pivoting arm being mounted on a body (1) which can move towards or away from the clamping device characterised in that the body (1) is mounted for sliding motion on a pair of parallel bars (2) extending from the locating frame (3) and in that a swinging handle (11) is pivotably mounted on the locating frame (3) and connected to the body (1) by a connecting rod (12) attached to the swinging handle intermediate its length for moving the cutting blade (30) forwards and backwards in a direction perpendicular to the axis of the rail (5) during cutting thereof.

2. A cutting apparatus according to Claim 1, characterised in that the parallel bars (2) extend substantially horizontally and are perpendicular relative to the rail (5).

3. A cutting apparatus according to Claim 1 or Claim 2, characterised in that the locating frame (3) comprises a plurality of locations to which locating studs (6a, 6b, 6c) may be fixed, the locating studs being shaped to cooperate with respective rail cross-sections to provide positive location of the locating frame relative to the rail (5).

4. A cutting apparatus according to Claim 3, characterised in that the locating studs (6a, 6b, 6c) comprise a medial rail support (6a) for applying pressure to the central web (5a) of the rail (5), an upward rail support (6b) for applying upward pressure to the rail head (5c) and upper rail supports (6c) for applying pressure to the side of the rail head (5c).

5. A cutting apparatus according to any preceding Claim, characterised in that a clamp screw (8) is threaded through the clamp arm (4) to apply a vertical force to the rail (5).

6. A cutting apparatus according to any preceding Claim, characterised in that the cutting saw is mounted to the free end of the pivoting cutting arm (17), the blade (30) being driven in rotation by a motor (18) mounted on the cutting arm.

7. A cutting apparatus according to any preceding Claim, characterised in that the angle between the surface of the rail (5) and the radius extending from the axis of rotation (B) of the saw blade (30) to the corner of the rail at its point of contact (C) with the saw blade (30) is about 45 degrees.

8. A cutting apparatus according to any preceding claim, characterised in that a handle (26) is attached to the pivoting arm (17) for urging the saw blade (30) against the rail (5).

9. A cutting apparatus according to any preceding Claim, characterised in that springs (24) are provided for controlling the cutting pressure.

## Patentansprüche

1. Schneidvorrichtung für Eisenbahnschienen (5) bestehend aus einer Klemmvorrichtung mit einem Paßrahmen (3), der mit einer seitlichen Fläche der Schiene verbunden werden kann, und einem Klemmarm (4) an der andere Seite der Schiene, um eine Verbindung zwischen Schiene und Paßrahmen herzustellen, ferner bestehend aus einer Schneidsäge mit einer kreisförmigen Schneidklinge (3), wobei die Säge an einem Dreharm (17) zum Ausführen einer Schwenkbewegung senkrecht zu der Achse einer in die Klemmvorrichtung eingespannten Schiene (5) angeordnet ist und der Dreharm an einem Körper (1) befestigt ist, der sich zu der Klemmvorrichtung hin oder von dieser weg bewegen kann, dadurch gekennzeichnet, daß der Körper (1) zum Ausführen einer Schiebebewegung an einem Paar parallel verlaufender Stangen (2) befestigt ist, die sich von dem Paßrahmen (3) erstrecken, und daß ein Schwenkgriff (11) drehbar an dem Paßrahmen (3) angeordnet und mit dem Körper (1) durch eine Verbindungsstange (12) verbunden ist, die an dem Schwenkgriff befestigt ist, um die Schneidklinge (30) während des Schneidvorgangs vorwärts und rückwärts senkrecht zu der Achse der Schiene (5) zu bewegen.

2. Schneidvorrichtung nach Anspruch 1, dadurch gekennzeichnet, daß sich die parallel verlaufenden Stangen (2) im wesentlichen horizontal erstrecken und senkrecht zu der Schiene ausgerichtet sind.

3. Schneidvorrichtung nach Anspruch 1 oder Anspruch 2, dadurch gekennzeichnet, daß der Paßrahmen (3) eine Vielzahl von Stellen aufweist, an denen Positionsbolzen (6a, 6b, 6c) befestigt werden können, die derart geformt sind, daß sie zu den jeweiligen Schienenquerschnitten passen, um eine geeignete Stellung des Paßrahmens an der Schiene (5) zu ermöglichen.

4. Schneidvorrichtung nach Anspruch 3, dadurch gekennzeichnet, daß die Positionsbolzen (6a, 6b, 6c) eine mittlere Schienenstütze (6a) aufweisen, um Druck auf den Mittelsteg (5a) der Schiene (5) auszuüben, eine nach oben gerichtete Schienenstütze (6b), um Druck nach oben auf den Schienenkopf (5c) auszuüben und obere Schienenstützen (6c), um Druck auf die Seite des Schienenkopfes (5c) auszuüben.

5. Schneidvorrichtung nach einem der obigen Ansprüche, dadurch gekennzeichnet, daß eine Klemmschraube (8) durch den Klemmarm (4) geschraubt ist, um eine vertikale Kraft auf die Schiene (5) auszuüben.

6. Schneidvorrichtung nach einem der obigen Ansprüche, dadurch gekennzeichnet, daß die Schneidsäge an dem freien Ende des Drehschneidarms (17) befestigt ist, wobei die Klinge (30) durch einen an dem Schneidarm befestigten Motor (18) gedreht wird.

7. Schneidvorrichtung nach einem der obigen Ansprüche, dadurch gekennzeichnet, daß der Winkel zwischen der Oberfläche der Schiene (5) und dem Radius, der sich von der Rotationsachse (B) des Sägeblatts (30) zu der Ecke der Schiene an dem Kontaktpunkt (C) mit dem Sägeblatt (30) erstreckt, ca. 45 Grad beträgt.

8. Schneidvorrichtung nach einem der obigen Ansprüche, dadurch gekennzeichnet, daß ein Griff (26) an dem Dreharm (17) befestigt ist, um das Sägeblatt (30) gegen die Schiene (5) zu drücken.

9. Schneidvorrichtung nach einem der obigen Ansprüche, dadurch gekennzeichnet, daß Federn (24) zur Steuerung des Schneiddrucks angeordnet sind.

## Revendications

1. Dispositif de coupe pour un rail de chemin de fer (5), comprenant un dispositif de serrage comportant un bâti de positionnement (3) pouvant venir en prise avec une face latérale du rail et un bras de serrage (4) agissant sur l'autre face du rail de façon à pousser le bâti de positionnement en contact avec celui-ci, une scie de coupe comportant une lame de coupe circulaire (3), la scie étant montée sur un bras pivotant (17) pour un déplacement oscillant dans un plan perpendiculaire à l'axe d'un rail (5) serré dans le dispositif de serrage, le bras pivotant étant monté sur un corps (1) qui peut se rapprocher ou s'éloigner du dispositif de serrage, caractérisé en ce que le corps (1) est monté pour effectuer un déplacement coulissant sur une paire de barres parallèles (2) s'étendant à partir du bâti de positionnement (3) et en ce qu'une poignée oscillante (11) est montée de façon à pouvoir pivoter sur le bâti de positionnement (3) et est raccordée au corps (1) par une tige de raccordement (12) fixée à la poignée oscillante dans une position intermédiaire à sa longueur pour déplacer la lame de coupe (30) vers l'avant et vers l'arrière dans une direction perpendiculaire à l'axe du rail (5) durant la coupe de celui-ci.

2. Dispositif de coupe selon la revendication 1, caractérisé en ce que les barres parallèles (2) s'étendent sensiblement horizontalement et sont perpendiculaires au rail (5).

3. Dispositif de coupe selon la revendication 1 ou la revendication 2, caractérisé en ce que le bâti de positionnement (3) comprend une pluralité d'emplacements dans lesquels des pitons de positionnement (6a, 6b, 6c) peuvent être fixés, les pitons de positionnement ayant une forme leur permettant de coopérer avec les sections transversales respectives du rail afin d'assurer un positionnement efficace du bâti de positionnement par rapport au rail (5).

4. Dispositif de coupe selon la revendication 3, caractérisé en ce que les pitons de positionnement (6a, 6b, 6c) comprennent un support de rail intermédiaire (6a) pour appliquer une pression à l'âme centrale (5a) du rail (5), un support de rail dirigé vers le haut (6b) pour appliquer une pression vers le haut au champignon de rail (5c) et des supports supérieurs de rail (6c) pour appliquer une pression au côté du champignon de rail (5c).

5. Dispositif de coupe selon l'une quelconque des revendications précédentes, caractérisé en ce qu'une vis de serrage (8) est vissée à travers le bras de serrage (4) afin d'appliquer une force verticale au rail (5).

6. Dispositif de coupe selon l'une quelconque des revendications précédentes, caractérisé en ce que la scie de coupe est montée sur l'extrémité libre du bras de coupe pivotant (17), la lame (30) étant entraînée en rotation par un moteur (18) monté sur le bras de coupe.

7. Dispositif de coupe selon l'une quelconque des revendications précédentes, caractérisé en ce que l'angle entre la surface du rail (5) et le rayon s'étendant de l'axe de rotation (B) de la lame de scie (30) au coin du rail en son point de contact (C) avec la lame de scie (30) est d'environ 45 degrés.

8. Dispositif de coupe selon l'une quelconque des revendications précédentes, caractérisé en ce qu'une poignée (26) est fixée au bras pivotant (17) pour pousser la lame de scie (30) contre le rail (5).

9. Dispositif de coupe selon l'une quelconque des revendications précédentes, caractérisé en ce que des ressorts (24) sont présents pour contrôler la pression de coupe.
